# NOUVEAU FASCICULE DE BREVET EUROPEEN

(11) **EP 1 897 632 B2**
(45) Date de publication et mention de la décision concernant l'opposition: **08.05.2013**
(45) Mention de la délivrance du brevet: 27.01.2010
(21) Numéro de dépôt: 07301281.7
(22) Date de dépôt: 27.07.2007
(51) Int. Cl.: B21D 39/02, B60J 5/00, B62D 25/10, F16J 15/14

(54) **Joint d'assemblage par sertissage d'éléments de tôle, ouvrant de véhicule automobile comprenant un tel joint, et procédé de solidarisation par sertissage d'éléments de tôle de véhicule automobile**
Montageverbindung durch Bördeln von Blechelementen, Öffnungselement eines Kraftfahrzeugs, das eine solche Verbindung umfasst, und Verfahren zur Verbindung durch Bördeln von Blechelementen eines Kraftfahrzeugs
Assembly joint by crimping sheet metal elements, automobile door comprising such a joint, and method of attachment by crimping of automobile sheet metal elements

(30) Priorité: 08.09.2006 FR 0653638
(43) Date de publication de la demande: 12.03.2008
(73) Titulaire: PEUGEOT CITROËN AUTOMOBILES S.A., 78140 Vélizy Villacoublay (FR)
(72) Inventeur: Guillien, Joël, 25200 MONTBELIARD (FR)
(74) Mandataire: Allain, Laurent

(56) Documents cités:
- JP-A- 10 180 373
- US-A1- 2003 067 187
- US-A1- 2004 245 676

## Description

La présente invention concerne un joint d'assemblage selon le préambule de la revendication 1.

Le brevet US 2003 0 671 82 se rapporte à un joint d'assemblage destiné à solidariser, par sertissage, deux éléments de tôle, ce joint définissant un canal débouchant à l'air libre. Le brevet US 2004 245 676 décrit un procéder de fabrication d'une porte de véhicule, sur la base d'un sertissage entre un panneau intérieur et un panneau extérieur.

Les véhicules automobiles sont généralement pourvus d'ouvrants tels que des portes, capot, coffre ou volet arrière, dont l'assemblage est assuré par, d'une part, un collage, et, d'autre part, un sertissage entre un premier élément de tôle et un deuxième élément de tôle. Après ferrage, la caisse est immergée dans un bain de peinture par cataphorèse dans lequel les interstices et les corps creux se remplissent de peinture électrodéposée. Suivent ensuite des phases de rinçage et de cuisson de la peinture cataphorèse. Malgré cette phase de rinçage, les résidus de peinture demeurent, par exemple, à l'accostage de deux éléments de tôle. Sous l'action de la chaleur lors de la phase d'étuvage destiné à la cuisson de la peinture cataphorèse, les résidus de peinture et le cordon de colle déposé lors du ferrage dégagent des gaz. La pression s'accroît dans les zones fermées de l'assemblage par sertissage, laquelle pression chasse les résidus de peinture en ébullition vers l'extérieur. Les sertis des ouvrants sur les zones situées à l'aplomb des pièces de robe sont ainsi à l'origine de coulures de peinture cataphorèse, ces coulures engendrant des défauts d'aspect nécessitant des reprises. Ceci entraîne évidemment des coûts de fabrication supplémentaires.

Le problème technique à résoudre est d'éliminer les défauts d'aspect dus aux coulures de peinture cataphorèse dans les zones de sertissage d'éléments de tôles.

A cet effet, l'invention a pour objet un joint d'assemblage du type précité, selon la partie caractérisante de la revendication 1.

Ainsi, toute montée en pression à l'interface des zones de sertissage des éléments de tôle est évitée en canalisant les gaz et en les faisant déboucher à l'air libre.

Selon d'autres modes de réalisation :
- le serti comprend un bord du premier élément replié en forme de U sur une extrémité libre du deuxième élément, ladite extrémité étant en retrait du fond de cavité ;
- le cordon de colle est déposé avant sertissage à distance (A) de l'extrémité libre du deuxième élément ;
- le cordon de colle est déposé avant sertissage à distance (B) d'un bord plié en forme de L du premier élément ;
- la largeur (C) du joint d'encollage de matériau adhésif au niveau de l'interface après sertissage est supérieure ou égale à 6 mm.

L'invention a également pour objet un ouvrant de véhicule automobile, comprenant une peau extérieure en tôle (18) comme premier élément, une doublure intérieure en tôle (20) comme deuxième élément, et un joint d'assemblage selon l'une quelconque des revendications précédentes.

L'invention a également pour objet un procédé de solidarisation par sertissage d'un premier élément de tôle d'un véhicule automobile à un deuxième élément de tôle du même véhicule automobile, le procédé comprenant les étapes consistant à :
- déposer, préalablement au sertissage, un cordon de matériau adhésif à un interface du premier élément et du deuxième élément ; et
- sertir le premier élément de tôle sur le deuxième élément de tôle;
- définir, au niveau du sertissage, une cavité interne comportant un fond ;
caractérisé en ce qu'il comprend les étapes selon la partie caractérisante de la revendication 7.

Suivant un mode de mise en oeuvre de ce procédé, la dépose du cordon adhésif et le sertissage sont obtenus par des moyens robotisés.

L'invention et ses avantages seront mieux compris à la lecture de la description qui va suivre, donnée uniquement à titre d'exemple et faite en se référant aux dessins annexés, sur lesquels :
- la Figure 1 est une vue schématique montrant un ouvrant d'un véhicule automobile selon l'invention,
- la Figure 2 est une vue à échelle agrandie du détail 2 de la Figure 1,
- la Figure 3 est une vue schématique à échelle agrandie en coupe verticale montrant un assemblage selon l'invention avant sertissage,
- la Figure 4 est une vue schématique à échelle agrandie en coupe verticale suivant la ligne IV-IV de la Figure 2 montrant l'assemblage après sertissage.

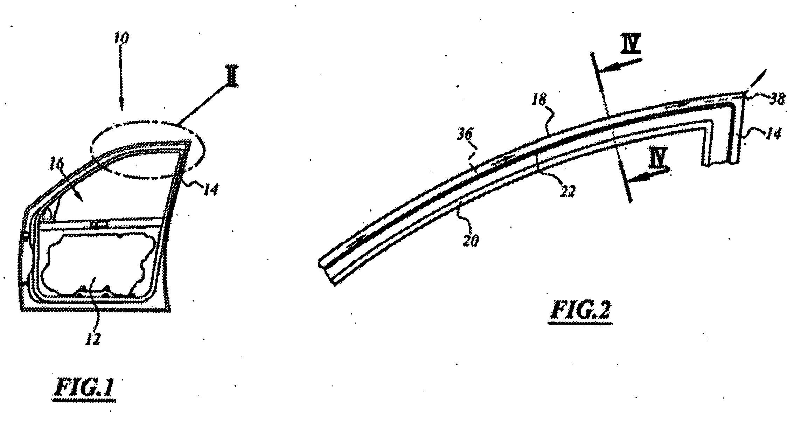

Sur la Figure 1 est représenté schématiquement un ouvrant de véhicule automobile 10, en particulier une porte. Cet ouvrant 10 comprend un caisson inférieur 12 et un cadre périphérique 14. Le caisson 12 et le cadre 14 délimitent une fenêtre 16.

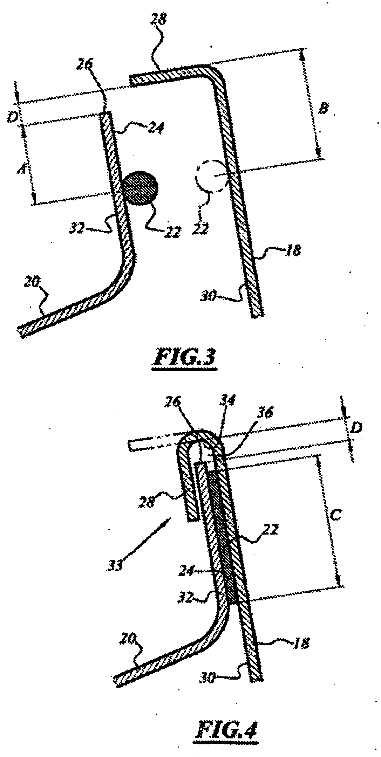

Comme représenté sur les Figures 3 et 4, l'ouvrant 10 comprend un premier élément de tôle 18, appelé également peau, et un deuxième élément de tôle 20, appelé également doublure. La peau 18 est généralement disposée à l'extérieur du véhicule, alors que la doublure 20 est disposée du côté intérieur du même véhicule, sur toute la périphérie de la porte.

Pour des raisons d'aspect et de procédé de fabrication, la peau 18 et la doublure 20 sont assemblées successivement par collage et sertissage. Pour cela, un cordon de colle 22 de section générale circulaire est déposé sur la face 24 de la doublure 20, orientée vers la peau 18. Le cordon de colle 22 est déposé à une distance A d'environ 8 mm de l'extrémité libre 26 de la doublure 20.

La peau 18 présente un bord 28 plié en forme de L, à environ 90° de la partie courante de la peau 18. Dans une variante, le cordon de colle 22 représenté en traits mixtes, est déposé sur la face 30 de la peau 18 tournée vers la doublure 20. Le cordon de colle 22 est alors déposé à distance B d'environ 11 mm du bord extérieur du pli 28 de la peau 18.

La face 24 de la doublure 20 et la face 30 de la peau 18 sont destinées à former l'interface d'un assemblage collé et serti. Pour cela, les faces 24 et 30 sont approchées parallèlement, l'extrémité libre 26 de la doublure 20 se trouvant à une distance D d'environ 1,5 mm du pli intérieur du bord 28 en L de la peau 18.

Comme représenté à la Figure 4, le cordon de colle 22 est alors écrasé à l'interface de la peau 18 et de la doublure 20, sur une largeur C d'au moins 6 mm.

Il est à noter que le cordon de colle 22 une fois écrasé ne dépasse pas de l'extrémité libre 26 de la doublure 20, cette extrémité libre restant distante du bord en L 28 représenté en traits mixtes sur la Figure 4. Ce bord en L 28 est alors replié en forme de U pour recouvrir partiellement la face 32 de la doublure 20 tournée vers le côté intérieur du véhicule. Cette opération constitue le sertissage de l'élément de peau 18 sur l'élément de doublure 20, et le serti 33 obtenu définit un fond de serti 34 exempt de colle sur au moins la hauteur D égale à environ 1,5 mm. Ce fond de serti 34 s'étend tout au long du serti 33 à la périphérie de l'ouvrant 10, créant ainsi une cavité interne 36 débouchant à l'air libre au moins en partie supérieure sur un évent 38 du cadre 14 de l'ouvrant 10 (Figure 2).

Cette cavité 36 est continue tout au long du serti périphérique et devient un canal 36 permettant d'évacuer un fluide, en particulier les composés volatils issus de la peinture cataphorèse et de la colle lors de la phase d'étuvage.

Le cordon de colle ayant été déposé suffisamment en retrait du fond de serti 34, celui-ci ne présente, tout au long du serti périphérique, ni de parties gavées, c'est-à-dire sujettes au remplissage complet du fond de serti, ni de poches d'airs en alternance avec des parties gavées.

Ceci évite que d'éventuelles poches d'air se chargent lors de la phase d'étuvage de composés volatils issus de la cuisson de la peinture cataphorèse et de la colle, et augmentent en pression. Ainsi, la peinture cataphorèse présente dans les interstices et les corps creux ne peut couler sous l'effet de cette pression et engendrer des coulures à l'aplomb des pièces de robe du véhicule automobile.

Le canal 36 d'évacuation des gaz constitue ainsi un couloir de décompression, les gaz étant évacués à l'air libre par au moins l'évent 38 suivant les flèches représentées sur la Figure 2.

Il est à noter que le cordon de colle est déposé par des moyens robotisés et que le serti est obtenu également par des moyens robotisés appropriés.

Il est à noter également que l'invention est compatible avec les normes et règlements en vigueur relatifs à la tenue anticorrosion de la tôle.

Grâce à l'invention, les défauts d'aspect dus aux coulures de peinture cataphorèse sont éliminés. Les coûts de fabrication sont ainsi réduits sensiblement.

## Revendications

1. Joint d'assemblage destiné à solidariser par sertissage un premier élément de tôle (18) et un deuxième élément de tôle (20),
le joint d'assemblage étant du type comprenant :
- un interface (24, 30) des premier (18) et deuxième (20) éléments de tôle;
- un joint d'encollage (22) en matériau adhésif disposé à
l'interface (24, 30) ; et
- un serti (33) du premier élément de tôle (18) sur le deuxième élément de tôle (20), définissant une cavité interne (36) comportant un fond (34), le joint d'encollage (22) en matériau adhésif étant disposé en retrait du fond (34) de la cavité (36) de manière à constituer, en fond (34) de cavité (36), un canal (36) relié à l'air libre, la cavité (36) étant continue tout au long du serti (33), ce dernier étant périphérique, et le canal (36) formé par ladite cavité débouchant à l'air libre par l'intermédiaire d'au moins un évent (38),
**Caractérisé en ce que** le joint d'encollage (22) en matériau adhésif est issu d'un dépôt de cordon de colle sur une face (24, 30) dudit interface, préalablement au sertissage et le fond de serti (34) est exempt de colle sur au moins une hauteur D égale à 1,5 mm, et **en ce que** le canal (36) d'évacuation des gaz constitue ainsi un couloir de décompression, les gaz étant évacués à l'air libre par au moins-l'évent (38) au bout dudit canal (36).

2. Joint d'assemblage selon la revendication 1, **caractérisé en ce que** le serti comprend un bord (28) du premier élément (18) replié en forme de U sur une extrémité libre (26) du deuxième élément (20), ladite extrémité étant en retrait du fond (34) de cavité.

3. Joint d'assemblage selon la revendication 1, **caractérisé en ce que** le cordon de colle (22) est déposé avant sertissage à distance (A) de l'extrémité libre (26) du deuxième élément (20).

4. Joint d'assemblage selon la revendication 1, **caractérisé en ce que** le cordon de colle (22) est déposé avant sertissage à distance (B) d'un bord plié en forme de L (28) du premier élément (18).

5. Joint d'assemblage selon l'une quelconque des revendications précédentes, **caractérisé en ce que** la largeur (C) du joint d'encollage (22) de matériau adhésif au niveau de l'interface après sertissage est supérieure ou égale à 6 mm.

6. Ouvrant de véhicule automobile comprenant une peau extérieure en tôle (18) comme premier élément, une doublure intérieure en tôle (20) comme deuxième élément, et un joint d'assemblage selon l'une quelconque des revendications précédentes.

7. Procédé de solidarisation par sertissage d'un premier élément de tôle (18) d'un véhicule automobile à un deuxième élément de tôle (20) du même véhicule, le procédé comprenant les étapes consistant à :
- déposer, préalablement au sertissage, un cordon (22) de matériau adhésif à un interface (24, 30) du premier élément (18) et du deuxième élément (20) ; et
- sertir le premier élément de tôle (18) sur le deuxième élément de tôle (20) ;
- définir, au niveau du sertissage, une cavité interne (36) comportant un fond (34) ;
**caractérisé en ce qu'**il comprend les étapes consistant à :
- positionner le joint d'encollage (22) de matériau adhésif en retrait du fond (34) de la cavité (36) de manière à créer un fond de serti (34) exempt de colle sur au moins une hauteur D égale à 1,5 mm ;
- constituer, en fond (34) de cavité (36), après sertissage, un canal (36) d'évacuation des gaz relié à l'air libre par au moins un évent (38), ledit canal (36) constituant un couloir de décompression, les gaz étant évacués à l'air libre par au moins l'évent (38) au bout du canal.

8. Procédé selon la revendication 7, **caractérisé en ce que** la dépose du cordon adhésif (22) et le sertissage sont obtenus par des moyens robotisés.

## Patentansprüche

1. Montageverbindung, die dazu bestimmt ist, ein erstes Blechelement (18) und ein zweites Blechelement (20) durch Umfalzen fest miteinander zu verbinden, wobei die Montageverbindung von dem Typ ist, der enthält:
- eine Verbindungsfläche (24, 30) des ersten (18) und des zweiten (20) Blechelements;
- eine Klebverbindung (22) aus Klebstoff, die an der Verbindungsfläche (24, 30) angeordnet ist; und
- eine Umfalzung (33) des ersten Blechelements (18) auf das zweite Blechelement (20), die einen Innenhohlraum (36} definiert, der einen Boden (34) aufweist, wobei die Klebverbindung (22) aus Klebstoff vom Boden (34) des Hohlraums (36) zurückgesetzt angeordnet ist, um am Boden (34) des Hohlraums (36) einen Kanal (36) zu bilden, der mit der Umgebungsluft verbunden ist, wobei der Hohlraum (36) entlang der ganzen Umfalzung (33) durchgehend ist, wobei letztere eine Umfangsumfalzung ist, und wobei der von dem Hohlraum gebildete Kanal (36) mittels mindestens eines Entlüftungslochs (38) in die Umgebungsluft mündet,
**dadurch gekennzeichnet, dass** die Klebverbindung (22) aus Klebstoff von einem Aufbringen eines Klebstoffwulsts auf eine Seite (24, 30) der Verbindungsfläche vor dem Umfalzen stammt und der Umfalzungsboden (34) über mindestens eine Höhe D gleich 1,5 mm keinen Klebstoff aufweist, und dass der Gasabfuhrkanal (36) so einen Druckminderungsgang bildet, wobei die Gase über mindestens das Entlüftungsloch (38) am Ende des Kanals (36) abgeführt werden.

2. Montageverbindung nach Anspruch 1, **dadurch gekennzeichnet, dass** die Umfalzung einen Rand (28) des ersten Elements (18) enthält, der U-förmig auf ein freies Ende (26) des zweiten Elements (20) umgebogen ist, wobei das Ende bezüglich des Hohlraumbodens (34) zurückgesetzt ist.

3. Montageverbindung nach Anspruch 1, **dadurch gekennzeichnet, dass** der Klebstoffwulst (22) vor dem Umfalzen in einem Abstand (A) zum freien Ende (26) des zweiten Elements (20) aufgebracht wird.

4. Montageverbindung nach Anspruch 1, **dadurch gekennzeichnet, dass** der Klebstoffwulst (22) vor dem Umfalzen in einem Abstand (B) zu einem L-förmig umgebogenen Rand (28) des ersten Elements (18) aufgebracht wird.

5. Montageverbindung nach einem der vorhergehenden Ansprüche, **dadurch gekennzeichnet, dass** die Breite (C) der Klebverbindung (22) aus Klebstoff in Höhe der Verbindungsfläche nach dem Umfalzen größer als oder gleich 6 mm ist.

6. Türflügel eines Kraftfahrzeugs, der eine Außenhaut aus Blech (18) als erstes Element, ein Innenfutter aus Blech (20) als zweites Element und eine Montageverbindung nach einem der vorhergehenden Ansprüche aufweist.

7. Verfahren zur festen Verbindung durch Umfalzen eines ersten Blechelements (18) eines Kraftfahrzeugs mit einem zweiten Blechelement (20) des gleichen Fahrzeugs, wobei das Verfahren die Schritte enthält, die darin bestehen:
- vor dem Umfalzen einen Klebstoffwulst (22) an einer Verbindungsfläche (24, 30) des ersten Elements (18) und des zweiten Elements (20) aufzubringen, und
- das erste Blechelement (18) auf das zweite Blechelement (20) umzufalzen,
- in Höhe des Umfalzens einen Innenhohlraum (36) mit einem Boden (34) zu definieren,
**dadurch gekennzeichnet, dass** es die Schritte enthält, die darin bestehen:
- die Klebverbindung (22) aus Klebstoff vom Boden (34) des Hohlraums (36) zurückgesetzt aufzubringen, um einen klebstofffreien Umfalzungsboden (34) über mindestens eine Höhe D gleich 1,5 mm zu erzeugen;
- am Boden (34) des Hohlraums (36) nach dem Umfalzen einen Gasabfuhrkanal (36) zu bilden, der mit dem Umgebungsluft über mindestens ein Entlüftungsloch (38) verbunden ist, wobei der Kanal {36} einen Druckminderungsgang bildet, wobei die Gase über mindestens das Entlüftungsloch (38) am Ende des Kanals in die Umgebungsluft abgeführt werden.

8. Verfahren nach Anspruch 7, **dadurch gekennzeichnet, dass** das Aufbringen des Klebstoffwulsts (22) und das Umfalzen durch automatisierte Einrichtungen erhalten werden.

## Claims

1. Assembly joint for joining together a first sheet metal element (18) and a second sheet metal element (20) by crimping, the assembly joint being of the type comprising:
- an interface (24, 30) between the first sheet metal element (18) and the second sheet metal element (20) ;
- a bonding joint (22) made of adhesive material located at the interface (24, 30); and
- a crimp (33) of the first sheet metal element (18) over the second sheet metal element (20), defining an internal cavity (36) having a bottom (34), the bonding joint (22) made of adhesive material being located set back from the bottom (34) of the cavity (36) so as to form, at the bottom (34) of the cavity (36), a channel (36) connected to the atmosphere, the cavity (36) continuing along the entire length of the crimp (33), the latter being peripheral, and the channel (36) formed by said cavity opening to the atmosphere by way of at least one vent (38),
**characterized in that** the bonding joint (22) made of adhesive material is produced by an adhesive bead being deposited on one face (24, 30) of said interface prior to crimping and the bottom of the crimp (34) is free of adhesive at least over a height D equal to 1.5 mm, and **in that** the channel (36) for discharging gases thus forms a pressure relief duct, the gases being discharged to the atmosphere through at least one vent (38) at the end of said channel (36).

2. Assembly joint according to Claim 1, **characterized in that** the crimp comprises an edge (28) of the first element (18) folded in the form of a U over a free end (26) of the second element (20), said end being set back from the bottom (34) of the cavity.

3. Assembly joint according to Claim 1, **characterized in that** the adhesive bead (22) is deposited before crimping at a distance (A) from the free end (26) of the second element (20).

4. Assembly joint according to Claim 1, **characterized in that** the adhesive bead (22) is deposited before crimping at a distance (B) from an edge (28) of the first element (18), said edge being folded in the form of an L.

5. Assembly joint according to any one of the preceding claims, **characterized in that** the width (C) of the bonding joint (22) made of adhesive material at the interface after crimping is equal to or greater than 6 mm.

6. Motor vehicle opening leaf comprising a sheet metal external skin (18) as first element, a sheet metal internal lining (20) as second element and an assembly joint according to any one of the preceding claims.

7. Method for joining together a first sheet metal element (18) of a motor vehicle and a second sheet metal element (20) of the same vehicle by crimping, the method comprising the steps of:
- depositing prior to crimping an adhesive bead (22) at the interface (24, 30) between the first element (18) and the second element (20), and
- crimping the first sheet metal element (18) over the second sheet metal element (20);
- defining, at the crimp, an internal cavity (36) having a bottom (34);
**characterized in that** it comprises the steps of:
- positioning the bonding joint (22) of adhesive material set back from the bottom (34) of the cavity (36) so as to create a crimp bottom (34) free of adhesive at least over a height equal to 1.5 mm;
- forming at the bottom (34) of the cavity (36), after crimping, a channel (36) for discharging gases and connected to the atmosphere by at least one vent (38), said channel (36) forming a pressure relief duct, the gases being discharged to the atmosphere through at least the vent (38) at the end of the channel.

8. Method according to Claim 7, **characterized in that** the adhesive bead (22) is deposited and crimping is carried out by robotic means.
